# FASCICULE DE BREVET EUROPEEN

(11) **EP 4 158 172 B1**
(45) Date de publication et mention de la délivrance du brevet: **02.07.2025**
(21) Numéro de dépôt: 21734406.8
(22) Date de dépôt: 27.05.2021
(51) Int. Cl.: F02C 7/224

(54) **INSTALLATION D'ALIMENTATION EN CARBURANT CRYOGÉNIQUE DE LA CHAMBRE DE COMBUSTION D'UNE TURBOMACHINE**
EINRICHTUNG ZUR VERSORGUNG DER BRENNKAMMER EINER TURBOMASCHINE MIT KRYOGENEM BRENNSTOFF
INSTALLATION FOR SUPPLYING CRYOGENIC FUEL TO THE COMBUSTION CHAMBER OF A TURBOMACHINE

(30) Priorité: 28.05.2020 FR 2005640
(43) Date de publication de la demande: 05.04.2023
(73) Titulaire: SAFRAN, 75015 Paris (FR)
(72) Inventeur: SIBILLI, Thierry, 77550 MOISSY-CRAMAYEL (FR); REBHOLZ, Sarah, 77550 MOISSY-CRAMAYEL (FR)
(74) Mandataire: Regimbeau
(86) Numéro de dépôt international: PCT/FR2021/050963
(87) Numéro de publication internationale: WO 2021/240114

(56) Documents cités:
- EP-A2- 2 587 024
- US-A- 5 272 870
- US-A1- 2015 337 730
- US-A1- 2020 088 102
- US-B2- 9 932 124

## Description

### DOMAINE DE L'INVENTION

L'invention se situe dans le domaine des turbomachines pour aéronefs.

La présente invention concerne plus précisément une installation d'alimentation en carburant cryogénique de la chambre de combustion d'une turbomachine d'un aéronef et une turbomachine d'un aéronef comprenant une veine d'air primaire munie successivement d'au moins un compresseur d'air, d'une chambre de combustion alimentée en carburant cryogénique et d'au moins une turbine, cette turbomachine étant équipée de ladite installation d'alimentation en carburant cryogénique.

### ETAT DE LA TECHNIQUE

Les carburants cryogéniques sont habituellement mis en œuvre pour la propulsion spatiale car ils permettent des rendements thermodynamiques meilleurs. Leur transposition au domaine de l'aéronautique et l'industrialisation de leur emploi à grand échelle conduit toutefois à devoir résoudre un certain nombre de problèmes techniques.

Ainsi, l'emploi de l'hydrogène liquide a été envisagé car il permettrait de réduire à néant les émissions de CO2.

Un autre carburant cryogénique utilisable est le gaz naturel liquéfié (connu sous l'acronyme GNL), qui, par rapport à l'hydrogène liquide présente l'avantage supplémentaire de pouvoir être mis en œuvre à bien plus haute température, puisque sa température de liquéfaction à 1 bar (10⁵Pa) est de moins 161°C contre moins 252°C pour l'hydrogène liquide, ce qui simplifie son emploi.

Il pourrait également être souhaitable d'utiliser le carburant cryogénique dans la chambre de combustion non plus à l'état gazeux mais à l'état de fluide supercritique, ce qui n'est pas prévu dans l'état de la technique précité. Pour mémoire, on rappellera que le carburant atteint l'état de fluide supercritique lorsqu'il se trouve à une température supérieure à sa température critique et à une pression supérieure à sa pression critique.

Dans les deux cas précités, il reste toutefois nécessaire de transporter ces carburants cryogéniques sous forme liquide, pour que leur volume à transporter dans l'aéronef soit acceptable, puis de les vaporiser et/ou les réchauffer pour pouvoir les utiliser dans une chambre de combustion.

On connait déjà d'après le document US 5 272 870 une turbomachine qui comprend une chambre de combustion, alimentée en carburant par une pompe, via un circuit qui traverse une chambre de mélange de carburant puis un échangeur de chaleur. Toutefois, cet échangeur de chaleur permet uniquement de réaliser un échange de chaleur entre le carburant et de l'air provenant de l'extérieur de la turbomachine.

Ce document n'évoque absolument pas un circuit de conditionnement d'air, ni d'échanges thermiques réalisés avec l'air du circuit de conditionnement d'air.

### EXPOSE DE L'INVENTION

Un but de l'invention est donc de proposer une installation d'alimentation en carburant cryogénique de la chambre de combustion d'une turbomachine d'un aéronef, qui permette de vaporiser ce carburant cryogénique liquide ou de l'amener dans un état supercritique, d'une manière écologiquement et énergétiquement intéressante.

A cet effet, l'invention concerne une installation d'alimentation en carburant cryogénique de la chambre de combustion d'une turbomachine d'un aéronef, cet aéronef comprenant un circuit d'air conditionné.

Conformément à l'invention, cette installation comprend :
- un réservoir de carburant cryogénique à l'état liquide,
- une chambre de mélange recevant différents flux de carburant cryogénique à l'état supercritique ou gazeux, cette chambre de mélange étant configurée pour être raccordée à ladite chambre de combustion pour alimenter celle-ci en carburant cryogénique à l'état supercritique ou gazeux,
- au moins un échangeur de chaleur carburant cryogénique/air du circuit de conditionnement d'air de l'aéronef, monté sur une canalisation raccordant ledit réservoir de carburant cryogénique à ladite chambre de mélange et sur une canalisation configurée pour être raccordée au circuit d'air conditionné de l'aéronef, l'échange thermique s'y effectuant de façon à refroidir l'air du circuit de conditionnement d'air de l'aéronef et à augmenter la température du carburant cryogénique issu dudit réservoir.

Grâce à ces caractéristiques de l'invention, il est possible de récupérer de la chaleur issue d'équipements présents dans la turbomachine pour réchauffer le carburant cryogénique et l'amener en phase gazeuse ou supercritique.

Plus précisément, la présence d'un échangeur de chaleur carburant cryogénique/air du circuit de conditionnement d'air de l'aéronef permet de réchauffer ce carburant tout en diminuant la dimension des échangeurs utilisés dans un circuit de conditionnement d'air et/ou en réduisant la complexité du système.

Selon d'autres caractéristiques avantageuses et non limitatives de l'invention, prises seules ou en combinaison :
- l'installation comprend au moins un échangeur de chaleur carburant cryogénique /air circulant dans le compresseur d'air de la turbomachine, monté sur une canalisation raccordant ledit réservoir de carburant cryogénique à ladite chambre de mélange, l'échange thermique s'y effectuant de façon à réchauffer le carburant cryogénique et à refroidir l'air circulant dans le compresseur d'air de la turbomachine,
- l'installation comprend au moins un échangeur de chaleur carburant cryogénique /huile de lubrification, monté sur une canalisation raccordant ledit réservoir de carburant cryogénique à ladite chambre de mélange, l'échange thermique s'y effectuant de façon à réchauffer le carburant cryogénique et à refroidir l'huile de lubrification,
- l'installation comprend au moins un échangeur de chaleur carburant cryogénique /air de refroidissement des aubes de la turbine de la turbomachine, monté sur la canalisation raccordant le réservoir de carburant cryogénique à ladite chambre de mélange, en série et en aval de l'échangeur de chaleur carburant cryogénique /huile de lubrification, l'échange thermique s'y effectuant de façon à réchauffer le carburant cryogénique issu de l'échangeur de chaleur carburant cryogénique /huile de lubrification et à refroidir l'air de refroidissement des aubes de la turbine de la turbomachine,
- au moins l'un des échangeurs de chaleur parmi l'échangeur de chaleur carburant cryogénique/air du circuit de conditionnement d'air de l'aéronef, l'échangeur de chaleur carburant cryogénique/air (F1) circulant dans le compresseur d'air de la turbomachine, l'échangeur de chaleur carburant cryogénique/huile de lubrification et l'échangeur de chaleur carburant cryogénique/air de refroidissement des aubes de la turbine de la turbomachine est un échangeur de type supercritique qui permet d'amener le carburant cryogénique à une température supérieure à sa température critique.
- qu'au moins l'un des échangeurs de chaleur parmi l'échangeur de chaleur carburant cryogénique/air du circuit de conditionnement d'air de l'aéronef, l'échangeur de chaleur carburant cryogénique/air (F1) circulant dans le compresseur d'air de la turbomachine, l'échangeur de chaleur carburant cryogénique/huile de lubrification et l'échangeur de chaleur carburant cryogénique/air de refroidissement des aubes de la turbine de la turbomachine est un échangeur qui permet de faire passer le carburant cryogénique à l'état gazeux.
- l'échangeur de chaleur carburant cryogénique/air du circuit de conditionnement d'air de l'aéronef est un échangeur de chaleur carburant cryogénique vaporisé/air du circuit de conditionnement d'air de l'aéronef, qui réalise un échange thermique entre l'air du circuit de conditionnement d'air de l'aéronef et le carburant cryogénique qui s'est vaporisé à l'intérieur dudit réservoir de carburant cryogénique.
- l'échangeur de chaleur carburant cryogénique/air du circuit de conditionnement d'air de l'aéronef est un échangeur de chaleur carburant cryogénique /air du circuit de conditionnement d'air de l'aéronef, qui réalise un échange thermique entre l'air du circuit de conditionnement d'air de l'aéronef et le carburant cryogénique, stocké dans ledit réservoir de carburant cryogénique.
- l'installation comprend un compresseur haute pression de carburant cryogénique vaporisé, qui comprime le carburant cryogénique qui s'est vaporisé à l'intérieur dudit réservoir de carburant cryogénique et un réservoir tampon de stockage de carburant cryogénique à l'état gazeux, montés en série sur une canalisation raccordant la partie supérieure du réservoir de carburant cryogénique à ladite chambre de mélange, le réservoir tampon étant monté en aval dudit compresseur haute pression de carburant cryogénique.
- l'échangeur de chaleur carburant cryogénique vaporisé/air du circuit de conditionnement d'air de l'aéronef est monté sur la canalisation raccordant la partie supérieure du réservoir de carburant cryogénique à ladite chambre de mélange, entre le compresseur haute pression de carburant cryogénique vaporisé et le réservoir tampon de stockage de carburant cryogénique à l'état gazeux.
- l'installation comprend un premier échangeur de chaleur carburant cryogénique /air du circuit de conditionnement d'air de l'aéronef et un deuxième échangeur de chaleur carburant cryogénique /air du circuit de conditionnement d'air de l'aéronef, montés en série entre le réservoir de carburant cryogénique et ladite chambre de mélange.
- l'installation comprend une première pompe haute pression, disposée entre la chambre de mélange et la chambre de combustion, et qui permet d'amener le carburant cryogénique issu de cette chambre de mélange, sous haute pression avant son introduction dans ladite chambre de combustion.
- l'installation comprend au moins un échangeur de chaleur carburant cryogénique /air circulant dans le compresseur d'air de la turbomachine, monté sur une canalisation raccordant ledit réservoir de carburant cryogénique à ladite chambre de mélange, l'échange thermique s'y effectuant de façon à réchauffer le carburant cryogénique et à refroidir l'air circulant dans le compresseur d'air de la turbomachine, au moins un échangeur de chaleur carburant cryogénique /huile de lubrification, monté sur une canalisation raccordant ledit réservoir de carburant cryogénique à ladite chambre de mélange, l'échange thermique s'y effectuant de façon à réchauffer le carburant cryogénique et à refroidir l'huile de lubrification, et l'échangeur de chaleur carburant cryogénique /air circulant dans le compresseur d'air de la turbomachine et l'échangeur de chaleur carburant cryogénique /huile de lubrification sont montés en parallèle entre le réservoir de carburant cryogénique et la chambre de mélange.
- l'installation comprend au moins un échangeur de chaleur carburant cryogénique /air circulant dans le compresseur d'air de la turbomachine, monté sur une canalisation raccordant ledit réservoir de carburant cryogénique à ladite chambre de mélange, l'échange thermique s'y effectuant de façon à réchauffer le carburant cryogénique et à refroidir l'air circulant dans le compresseur d'air de la turbomachine, au moins un échangeur de chaleur carburant cryogénique /huile de lubrification, monté sur une canalisation raccordant ledit réservoir de carburant cryogénique à ladite chambre de mélange, l'échange thermique s'y effectuant de façon à réchauffer le carburant cryogénique et à refroidir l'huile de lubrification, et comprend une deuxième pompe haute pression, disposée en aval du réservoir de carburant cryogénique et en amont de l'échangeur de chaleur carburant cryogénique /air circulant dans le compresseur d'air de la turbomachine et en amont de l'échangeur de chaleur carburant cryogénique /huile de lubrification.
- ladite deuxième pompe haute pression permet d'amener le carburant cryogénique à une pression supérieure à sa pression critique.
- l'installation comprend au moins une vanne en amont de chaque échangeur de chaleur et en ce que l'ouverture et la fermeture de ces différentes vannes sont pilotées par une unité centrale de commande.
- le carburant cryogénique est choisi parmi l'hydrogène liquide et le gaz naturel liquéfié.

L'invention concerne également une turbomachine d'un aéronef comprenant une veine d'air primaire munie successivement d'au moins un compresseur d'air, d'une chambre de combustion alimentée en carburant cryogénique et d'au moins une turbine. Conformément à l'invention, cette turbomachine comprend une installation d'alimentation en carburant cryogénique de sa chambre de combustion, telle que précitée.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] représente une vue d'ensemble d'une turbomachine, apte à être équipée d'une installation d'alimentation en carburant cryogénique de sa chambre de combustion, conforme à l'invention.
[Fig. 2] est une vue schématique d'un premier mode de réalisation de l'installation d'alimentation en carburant cryogénique conforme à l'invention.
[Fig. 3] est une vue schématique d'un deuxième mode de réalisation de l'installation d'alimentation en carburant cryogénique conforme à l'invention.
[Fig. 4] est une vue schématique d'un troisième mode de réalisation de l'installation d'alimentation en carburant cryogénique conforme à l'invention.
[Fig. 5] est une vue schématique d'un quatrième mode de réalisation de l'installation d'alimentation en carburant cryogénique conforme à l'invention.

Sur l'ensemble des figures, les mêmes éléments portent des références identiques.

### DESCRIPTION DETAILLEE DE L'INVENTION

L'invention concerne une installation d'alimentation en carburant cryogénique de la chambre de combustion d'une turbomachine d'un aéronef, tel qu'un avion.

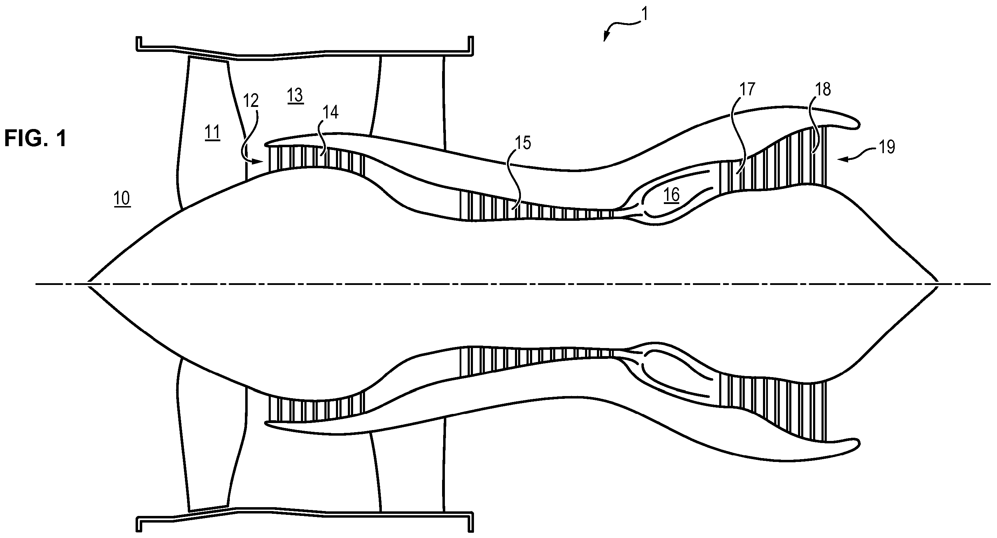

La figure 1 illustre un exemple d'une telle turbomachine 1. Il s'agit ici d'une turbomachine à double flux et à double corps.

Cette turbomachine 1 comprend successivement, dans le sens de la circulation de l'air, c'est-à-dire de l'amont (à gauche sur la figure 1) vers l'aval (à droite sur la figure 1), une entrée d'air 10 dans laquelle se trouve une soufflante 11, qui débite l'air d'une part dans une veine primaire 12 et d'autre part dans une veine secondaire 13. Par « veine », on entend le volume (ici en forme de canal annulaire) au travers duquel circule un flux d'air.

Le flux d'air circulant dans la veine primaire 12 traverse successivement un compresseur d'air basse pression 14, un compresseur d'air haute pression 15, une chambre de combustion 16, une turbine haute pression 17 et une turbine basse pression 18, avant d'être éjecté à travers une tuyère de flux primaire 19.

D'autres types de turbomachine pourraient être équipés de l'installation d'alimentation en carburant cryogénique conforme à l'invention, sans pour autant sortir du cadre de l'invention, par exemple une turbomachine à simple corps, qui ne comprend alors qu'un compresseur d'air et qu'une turbine, reliés entre eux par un arbre, la chambre de combustion étant interposée entre ce compresseur d'air et cette turbine.

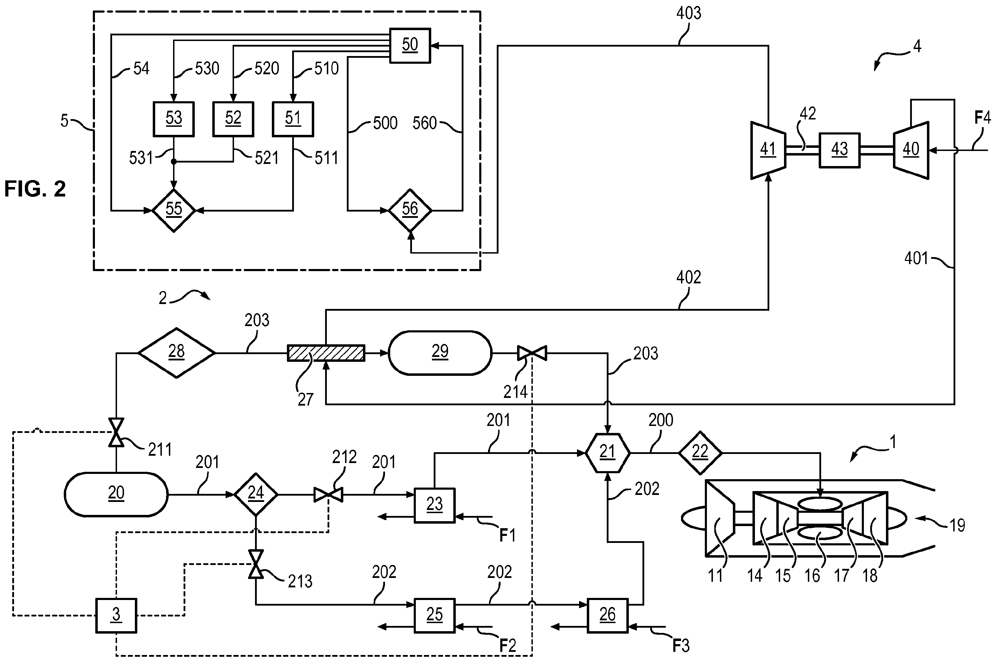

L'installation 2 d'alimentation en carburant cryogénique, conforme à l'invention, va maintenant être décrite en liaison avec la figure 2.

Cette installation 2 comprend un réservoir 20 de stockage de carburant cryogénique, à l'état liquide. Ce carburant cryogénique est destiné à alimenter la chambre de combustion 16, via diverses canalisations qui vont être décrites ultérieurement.

Ce carburant cryogénique est par exemple du gaz naturel liquéfié ou de l'hydrogène liquide.

On notera que bien que le carburant cryogénique soit stocké à l'état liquide dans le réservoir 20 et que ce dernier soit de préférence isolé thermiquement, une partie de ce carburant peut se vaporiser à l'intérieur du réservoir et s'accumuler dans la partie supérieure de celui-ci.

L'installation 2 comprend une chambre de mélange 21 qui reçoit différents flux de carburant cryogénique à l'état supercritique ou gazeux. Cette chambre de mélange 21 est raccordée à la chambre de combustion 16 par une canalisation 200, de façon à permettre l'alimentation de cette chambre en carburant cryogénique à l'état supercritique ou gazeux.

Bien que cela ne soit pas représenté sur les figures, un injecteur permet d'injecter le carburant dans la chambre de combustion 16.

De façon avantageuse, une première pompe haute pression 22 est disposée sur la canalisation 200 entre la chambre de mélange 21 et la chambre de combustion 16, de façon à amener le carburant cryogénique se trouvant à l'état gazeux ou supercritique et issu de la chambre de mélange 21, sous une haute pression, avant son introduction dans cette chambre de combustion 16. Le ou les compresseur(s) d'air compriment l'air en amont de la chambre de combustion 16, il règne donc dans celle-ci une pression assez élevée, (par exemple d'au moins 50 bars soit 50.10⁵ Pa). Pour pouvoir pulvériser le carburant dans la chambre 16, il faut donc l'introduire à une pression supérieure à celle de la chambre 16. On améliore ainsi l'efficacité du cycle thermodynamique de la turbomachine.

De préférence, l'installation 2 comprend également au moins un échangeur de chaleur 23 carburant cryogénique liquide/air circulant dans le compresseur de la turbomachine.

Cet échangeur de chaleur 23 est monté sur une canalisation 201 raccordant ledit réservoir de carburant cryogénique 20, (de préférence un point situé à la partie inférieure de celui-ci), à ladite chambre de mélange 21. Dans la partie inférieure du réservoir 20, le carburant cryogénique est liquide. L'échangeur 23 permet de réaliser un échange thermique afin d'une part, de réchauffer le carburant cryogénique, issu de ce réservoir 20, et d'autre part, de refroidir l'air circulant dans le compresseur (schématisé par le flux F1 sur les figures). L'échangeur de chaleur réduit la température de tout le débit du compresseur pour réduire le travail nécessaire à la compression. C'est ce qu'on appelle le refroidissement intermédiaire (en anglais « intercooling »). L'échange de chaleur peut être effectué en même temps que la compression et l'échangeur 23 est alors disposé par exemple dans le carter du compresseur. Il est également possible de disposer l'échangeur 23 entre le compresseur basse pression 14 et le compresseur haute pression 15.

Selon une première variante de réalisation, l'échangeur 23 est de type diphasique et permet de faire passer le carburant cryogénique liquide à l'état gazeux. Cet échangeur 23 est alors par exemple du type à coque et tubes.

Selon une deuxième variante de réalisation, l'échangeur 23 permet de faire passer le carburant cryogénique à une température supérieure à sa température critique. L'échangeur 23 est alors dit de type « supercritique ».

De préférence, une deuxième pompe haute pression 24 est disposée sur la canalisation 201, en aval du réservoir 20 et en amont de l'échangeur de chaleur 23.

De préférence, dans le cas où l'échangeur 23 est supercritique, alors la pompe 24 est choisi pour permettre d'amener le carburant cryogénique à une pression supérieure à sa pression critique.

De préférence, l'installation 2 comprend également un échangeur de chaleur 25 carburant cryogénique /huile de lubrification.

Cet échangeur de chaleur 25 est monté sur une canalisation 202 raccordant le réservoir de carburant cryogénique 20 à la chambre de mélange 21. De préférence, la canalisation 202 est raccordée à la deuxième pompe haute pression 24, lorsque celle-ci est présente.

Cet échangeur de chaleur 25 permet de réaliser un échange thermique, afin d'une part, de réchauffer le carburant cryogénique, issu du réservoir 20, et d'autre part, de refroidir l'huile de lubrification servant à lubrifier différents éléments mécaniques de la turbomachine 1. La flèche F2 sur les figures représente ce flux d'huile de lubrification.

A l'intérieur de la turbomachine, un certain nombre d'éléments mécaniques doivent en effet être refroidis par de l'huile de lubrification afin de maintenir leur intégrité mécanique. Ces éléments mécaniques sont par exemple un réducteur d'une boîte d'accessoires ou des paliers supportant un arbre tournant. L'huile, qui s'est réchauffée au contact de ces éléments mécaniques, sort ainsi refroidie de l'échangeur 25 et peut ensuite être renvoyée au contact des différents éléments mécaniques précités.

Selon une première variante de réalisation, l'échangeur 25 est de type diphasique, de préférence du type à plaques et à ailettes. Il permet de faire passer le carburant cryogénique liquide à l'état gazeux.

Selon une deuxième variante de réalisation, l'échangeur 25 permet de faire passer le carburant cryogénique à une température supérieure à sa température critique. L'échangeur 25 est alors dit de type « supercritique ».

De préférence, l'installation 2 comprend également un échangeur de chaleur 26 carburant cryogénique /air de refroidissement des aubes de la turbine de la turbomachine 1. Cet échangeur de chaleur 26 est monté sur la canalisation 202, en série avec l'échangeur de chaleur 25 et en aval de celui-ci, par rapport au sens de circulation du carburant cryogénique dans la canalisation 202. L'échangeur 26 est également situé en amont de la chambre de mélange 21.

Cet échangeur 26 permet d'une part, de réchauffer le carburant cryogénique à l'état gazeux, s'il se trouve sous la pression et la température critique, ou à l'état supercritique s'il se trouve au-dessus de la pression et de la température critique, issu de l'échangeur 25 et d'autre part, de refroidir l'air qui sert à refroidir les aubes de l'unique turbine ou de la turbine haute pression 17 et de la turbine basse pression 18 en cas de turbomachine à double corps. (La flèche F3 sur les figures représente le flux de cet air de refroidissement.

L'air servant au refroidissement des aubes de turbine est prélevé à la sortie du compresseur. En sortie du compresseur, cet air est chaud. L'emploi du carburant cryogénique comme source froide permet de refroidir davantage l'air servant au refroidissement des aubes et ainsi d'en utiliser moins que dans la technique de l'art antérieur et donc d'en prélever moins en sortie du compresseur (notamment du compresseur haute pression). Une plus grande quantité d'air comprimé, issu du compresseur, peut donc être dirigé dans la chambre de combustion 16 et on améliore ainsi le rendement global de la turbomachine.

L'injection d'un carburant froid dans la chambre de combustion 16 réduit l'efficacité de la combustion. Il est donc préférable de réchauffer encore ce carburant cryogénique, même après que celui-ci est changé de phase ou soit passé à l'état supercritique dans l'échangeur 25.

Cet échangeur 26 peut être de type diphasique, par exemple à plaques et à ailettes ou à coque et tubes ou être de type supercritique.

La deuxième pompe haute pression 24 permet d'augmenter la pression du carburant cryogénique liquide avant qu'il ne pénètre dans les échangeurs 23 et 25. De préférence, dans le cas où l'échangeur 25 et/ou l'échangeur 26 est supercritique, alors la pompe 24 est choisi pour permettre d'amener le carburant cryogénique à une pression supérieure à sa pression critique.

Dans les différents échangeurs 23, 25 et 26, les flux F1, F2 et F3 circulent à contre-courant du carburant cryogénique.

On notera que de préférence, et comme représenté sur les figures, l'échangeur 23 est monté en parallèle des échangeurs 25 et 26.

L'installation 2 comprend en outre au moins un échangeur de chaleur carburant cryogénique/air du circuit de conditionnement d'air de l'aéronef, qui interagit donc avec le circuit de conditionnement d'air qui appartient à l'aéronef.

Dans l'exemple de réalisation de l'installation 2, représenté sur la figure 2, cet échangeur de chaleur est du type échangeur de chaleur carburant cryogénique vaporisé /air du circuit de conditionnement d'air de l'aéronef et porte la référence numérique 27.

L'échangeur de chaleur 27 est monté sur une canalisation 203 qui raccorde le réservoir 20 à la chambre de mélange 21. Plus spécifiquement, cette canalisation 203 est raccordée à la partie supérieure du réservoir 20, à l'intérieur de laquelle le carburant cryogénique qui s'est vaporisé s'est accumulé.

Cet échangeur 27 permet de réchauffer encore davantage le carburant cryogénique vaporisé et qui se trouve donc à l'état gazeux et de refroidir l'air circulant dans le circuit de conditionnement d'air de l'aéronef, comme cela sera décrit plus en détail ultérieurement.

Cet échangeur 27 est de préférence de type diphasique, de préférence du type à plaques et à ailettes.

De façon avantageuse, une troisième pompe haute pression (ou compresseur haute pression) 28 est disposée sur la canalisation 203 en aval du réservoir 20 et en amont de l'échangeur de chaleur 27. Une telle pompe permet d'augmenter la pression du carburant cryogénique avant son introduction dans l'échangeur 27.

De façon avantageuse, un réservoir tampon de carburant cryogénique à l'état gazeux 29 est monté sur la canalisation 203 en aval de l'échangeur 27 et en amont de la chambre de mélange 21. Ainsi, pendant les manœuvres au sol de l'aéronef, le carburant cryogénique gazeux issu de l'échangeur 27 est stocké dans ce réservoir tampon 29. Pendant les phases de vol de l'aéronef, cette réserve additionnelle de carburant cryogénique gazeux peut alors être libérée du réservoir 29, pour alimenter la chambre de combustion 16, après passage dans la chambre de mélange 21.

De préférence, une vanne 211, 212, 213 est disposée en amont de chaque échangeur de chaleur respectivement 27, 23 et 25, sur les canalisations respectives 203, 201 et 202, afin de réguler les flux circulant dans ces différents échangeurs. De préférence également, une vanne 214 est disposée sur la canalisation 203, en aval du réservoir tampon 29, afin d'accumuler du carburant gazeux dans ce réservoir tampon 29 ou au contraire d'autoriser le passage de cette réserve de carburant gazeux, en direction de la chambre de mélange 21, en fonction des besoins L'ouverture et la fermeture de ces différentes vannes sont pilotées par une unité centrale de commande 3, tel qu'un ordinateur ou un automate programmable.

Un exemple de réalisation du circuit 4 de conditionnement d'air de l'aéronef va maintenant être décrit en liaison avec la figure 2.

Ce circuit 4 comprend un compresseur d'air à conditionner 40 et une turbine d'air à conditionner 41, raccordés entre eux par un arbre d'entraînement 42. Un moteur additionnel 43 placé sur l'arbre 42 fournit un complément d'énergie mécanique pour que la turbine 41 puisse entraîner en rotation le compresseur 40.

L'air entrant, prélevé à la sortie des compresseurs d'air 14 ou 15 ou d'un compresseur dédié de l'aéronef) est représenté sur le schéma par la flèche F4. Cet air entrant chaud pénètre dans le compresseur 40, d'où il ressort comprimé et encore plus chaud, puis circule dans une canalisation 401 qui raccorde le compresseur 40 à l'échangeur de chaleur 27 carburant cryogénique vaporisé/air du circuit de conditionnement d'air de l'aéronef. Il fournit de la chaleur au carburant cryogénique vaporisé, qui y circule également. L'air comprimé, un peu refroidi, circule alors dans une canalisation 402, qui raccorde l'échangeur 27 à la turbine 41. L'air est détendu et refroidi encore dans la turbine 41, d'où il ressort par une canalisation 403, pour être dirigé dans le circuit 5 de distribution d'air conditionné de l'aéronef. Il ressort ainsi à une température appropriée pour les passagers se trouvant dans la cabine et être mélangé avec le flux de recirculation dans une chambre de mélange 56 décrite ci-après.

Un exemple de réalisation de ce circuit 5 de distribution d'air conditionné de l'aéronef va maintenant être décrit. D'autres modes de réalisation de ce circuit 5 pourraient être envisagés, sans pour autant sortir du cadre de l'invention.

À l'intérieur de l'aéronef, l'air conditionné est destiné à être envoyé à l'intérieur de l'espace cabine 50, mais également aux éléments d'avionique et électriques 51, dans les toilettes et l'espace cuisine 52 et en soute dans l'espace de stockage du fret 53. Enfin, une partie de cet air conditionné, s'échappe ailleurs dans l'aéronef sous forme de fuites, (voir la référence 54). L'ensemble de ces flux d'air est ensuite évacué à l'extérieur de l'avion par la sortie 55.

De préférence, la canalisation 403 est raccordée à une chambre de mélange d'air conditionné 56. L'air sortant de cette chambre 56 est dirigé vers l'espace cabine 50 par une canalisation 560. L'air, sortant de l'espace cabine 50, est dirigé vers les éléments d'avionique et électrique 51, les toilettes et l'espace cuisine 52, et le fret 53 via des canalisations référencées respectivement 510, 520 et 530 et en ressort vers la sortie 55, via des canalisations référencées respectivement 511, 521 et 531. Enfin, une recirculation d'une partie de l'air de l'espace cabine 50, en direction de la chambre de mélange d'air conditionné 56 est possible via une canalisation 500.

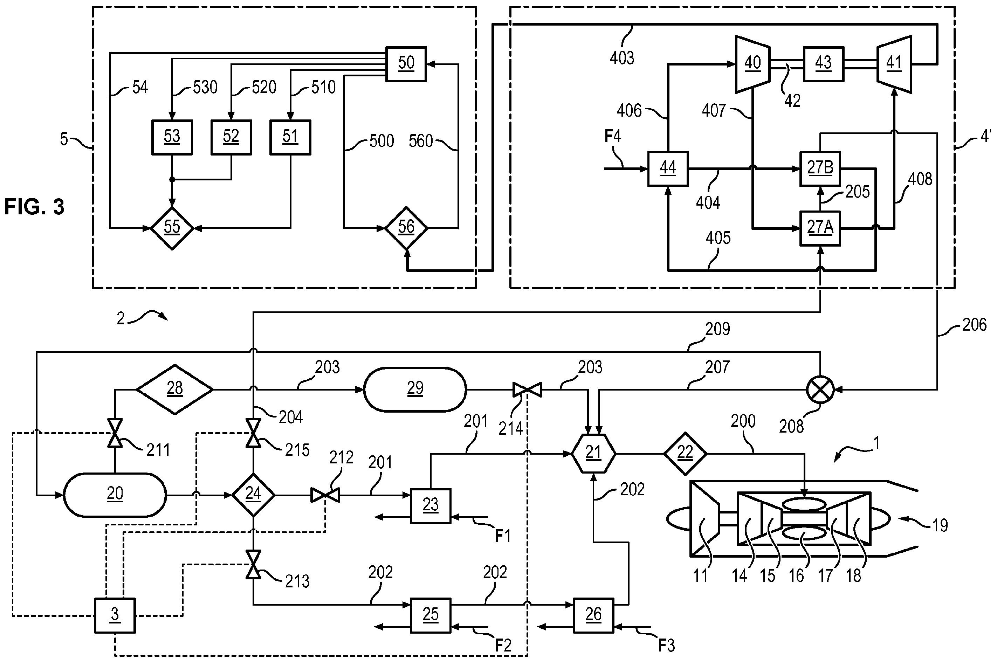

Une deuxième variante de réalisation du circuit de conditionnement d'air de l'aéronef va maintenant être décrite en liaison avec la figure 3. Ce circuit porte alors la référence 4'.

Il diffère du précédent circuit en ce qu'il comprend en outre un échangeur de chaleur de type condenseur 44.

Par ailleurs, dans l'installation 2, il n'y a plus l'échangeur de chaleur carburant cryogénique vaporisé/air du circuit de conditionnement d'air de l'aéronef 27, mais à la place il y a au moins un échangeur de chaleur carburant cryogénique /air du circuit de conditionnement d'air de l'aéronef, de préférence deux de ces types d'échangeurs, référencés respectivement pour le premier 27A et pour le deuxième 27B. Ces deux échangeurs sont montés en série sur une canalisation qui raccorde le réservoir de stockage 20, plus précisément la deuxième pompe haute pression 24, à la chambre de mélange 21.

La canalisation qui raccorde la deuxième pompe haute pression 24 au premier échangeur 27A porte la référence 204, celle qui raccorde les deux échangeurs 27A à 27B entre eux, la référence 205 et celles qui raccordent le deuxième échangeur 27B à la chambre de mélange 21, les références 206 et 207.

De préférence, une vanne 215 est placée sur la canalisation 204 en amont de la deuxième pompe haute pression 24 et en aval du premier échangeur 27A. Elle est pilotée par l'unité centrale 3.

En outre, de façon avantageuse, il est possible de prévoir une vanne à 3 voies 208 dont l'entrée est raccordée à la canalisation 206 et les deux sorties sont raccordées respectivement à la canalisation 207 et à une canalisation 209 qui raccorde la vanne à 3 voies 208 au réservoir de stockage 20.

Une partie du carburant cryogénique, stocké dans le réservoir 20, peut être dirigée via la canalisation 204 vers le premier échangeur 27A, dans lequel ce carburant très froid est réchauffé. Une fois réchauffé, le carburant cryogénique pénètre dans le deuxième échangeur 27B, dans lequel il est encore davantage réchauffé.

Les échangeurs 27A, 27B peuvent être soit diphasiques (le carburant y passe à l'état gazeux) change de phase pour passer à l'état gazeux, soit supercritiques (le carburant y passe à une température supérieure à sa température critique. Il en ressort pour être dirigé vers la vanne à 3 voies 208.

Cette vanne 208 peut occuper une première position dans laquelle la totalité du carburant cryogénique gazeux ou supercritique est dirigée vers la chambre de mélange 21, une deuxième position, dans laquelle la totalité du carburant cryogénique gazeux ou supercritique est dirigée vers le réservoir 20 et enfin une pluralité de positions intermédiaires, dans lesquelles un certain pourcentage du carburant cryogénique gazeux ou supercritique est dirigé vers le réservoir 20 et le reste vers la chambre de mélange 21, en fonction des phases de vol de l'aéronef. De préférence, au décollage, le carburant est dirigé vers la chambre 21, pendant la phase de descente ou au sol, le carburant est dirigé vers le réservoir 20 et en croisière, la vanne 208 est dans les positions intermédiaires.

Par ailleurs, dans le circuit 4' de conditionnement d'air de l'aéronef, le flux d'air entrant chaud schématisé par la flèche F4, traverse successivement le condenseur 44, puis via une canalisation 404, le deuxième échangeur de chaleur 27B carburant cryogénique liquide/air du circuit conditionnement d'air de l'aéronef. Il en ressort par une canalisation 405 pour retourner traverser le condenseur 44 et y réalise un échange thermique (en d'autres termes, cet air circulant dans la canalisation 405 et qui s'est refroidi, sert à condenser l'eau présente dans le flux d'air entrant F4 et en éliminer l'humidité. Il ressort du condenseur 44 par une canalisation 406 pour pénétrer dans le compresseur d'air à conditionner 40 où il est comprimé et réchauffé. Il ressort du compresseur 40, via une canalisation 407 pour traverser le premier échangeur de chaleur 27A carburant cryogénique /air du circuit conditionnement d'air de l'aéronef. Il ressort refroidi du premier échangeur 27A, via une canalisation 408, pour pénétrer dans la turbine 41 d'air à conditionner et enfin, en ressort comme précédemment via la canalisation 403 pour être dirigé vers la chambre de mélange d'air conditionné 56.

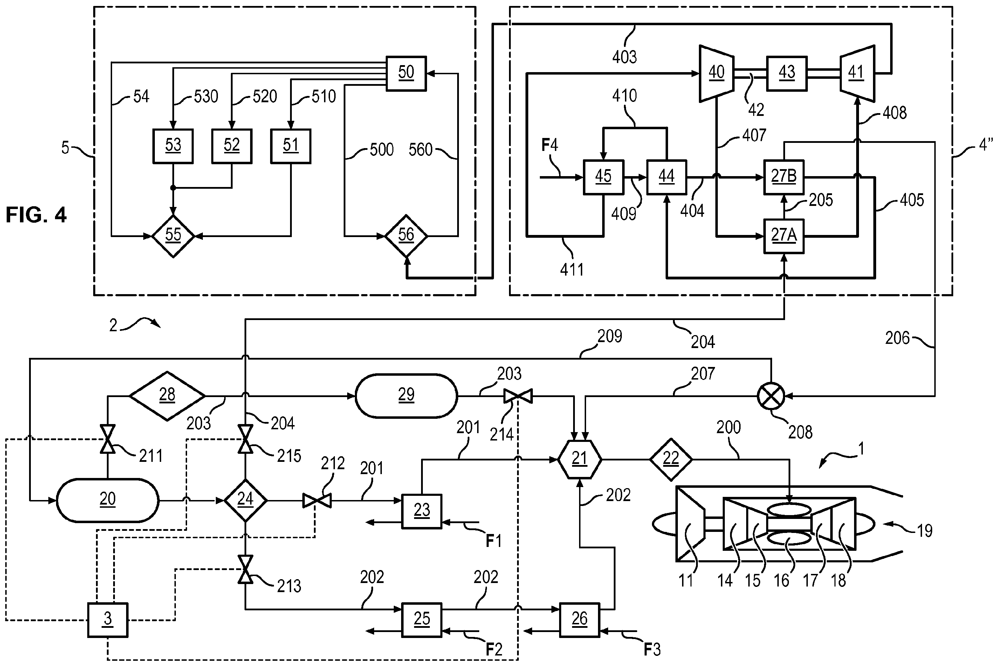

Une troisième variante de réalisation du circuit de conditionnement d'air de l'aéronef va maintenant être décrite en liaison avec la figure 4. Ce circuit porte alors la référence 4".

Les éléments identiques au circuit 4' portent les mêmes références numériques.

Ce circuit 4" diffère du circuit 4' en ce qu'il comprend un réchauffeur 45. Le flux d'air entrant F4 pénètre dans le circuit 4" par ce réchauffeur 45. Le réchauffeur 45 est raccordé au condenseur 44 par une canalisation 409. En outre, en retour, le condenseur 44 est raccordé au réchauffeur 45 par une canalisation 410. Enfin, le réchauffeur 45 est raccordé au compresseur 40 par une canalisation 411.

Le fonctionnement des échanges de chaleur dans le circuit 4" diffère de celui du circuit 4', en ce que le flux d'air entrant F4 s'est refroidi dans le réchauffeur 45 puis traverse le condenseur 44 où il se refroidit encore et en ce que le flux d'air sortant du condenseur 44 après être passé au travers du deuxième échangeur de chaleur 27B, est plus chaud à la sortie du condenseur 44 et lorsqu'il traverse le réchauffeur 45, il récupère de la chaleur du flux d'air entrant F4, avant d'être dirigé vers le compresseur 40.

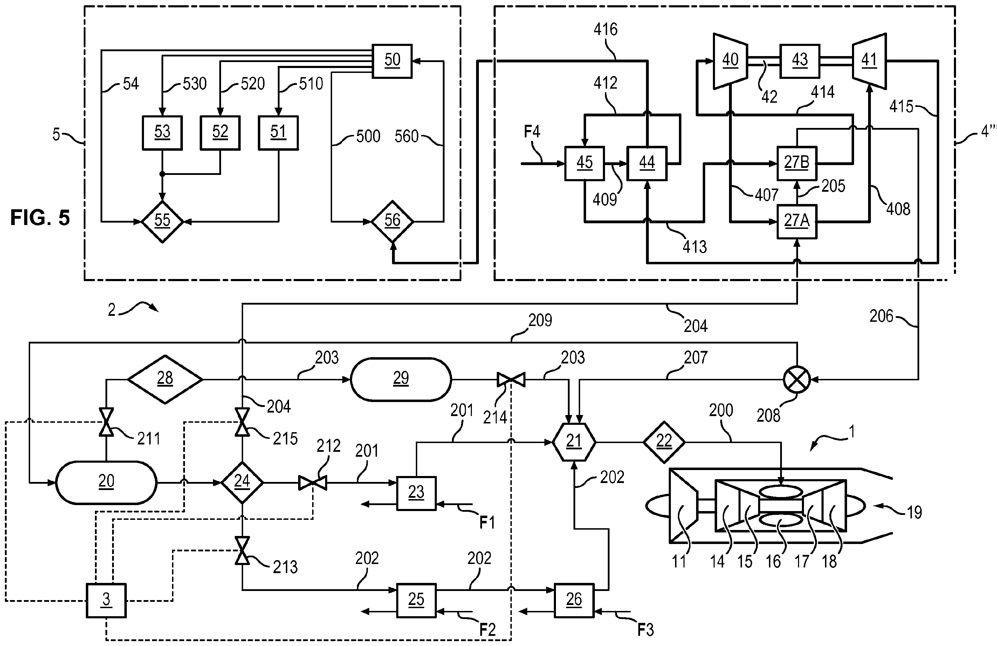

Une quatrième variante de réalisation du circuit de conditionnement d'air de l'aéronef va maintenant être décrite en liaison avec la figure 5. Ce circuit porte alors la référence 4"'. Il comprend les mêmes éléments que le circuit 4". En revanche la circulation d'un élément à l'autre diffère. Les canalisations qui sont identiques avec des circuits 4, 4' et 4" portent les mêmes références numériques.

Le condenseur 44 est raccordé au réchauffeur 45 par une canalisation 412 et le réchauffeur 45 est raccordé au deuxième échangeur de chaleur 27B par une canalisation 413. Le deuxième échangeur de chaleur 27B est raccordé au compresseur 40 par une canalisation 414. La turbine 41 est raccordée au condenseur 44 par une canalisation 415. Enfin, le condenseur 44 est raccordé à la chambre de mélange d'air conditionné 56 par une canalisation 416.

Les échanges de chaleur dans le circuit 4‴ diffèrent de ceux du circuit 4'', en ce que l'air sortant du condenseur 44 sert à refroidir l'air entrant F 4 circulant dans le réchauffeur 45. Cet air, qui a traversé le condenseur 44 et qui sort du réchauffeur 45 (via la canalisation 413) est dirigé vers le deuxième échangeur 27B pour amener le carburant cryogénique réchauffé, sortant du premier échangeur 27A, à être encore plus chaud. L'air refroidi sortant du deuxième échangeur 27B est envoyé vers le compresseur 40, dans lequel il est à la fois comprimé et réchauffé. Il en sort pour traverser le premier échangeur 27A et fournir de la chaleur au carburant cryogénique très froid qui sort du réservoir 20. Cet air refroidi est envoyé à la turbine 41 pour y être détendu et refroidi encore. À la sortie de la turbine 41, cet air est renvoyé au condenseur 44 où il est réchauffé par échange de chaleur avec le flux d'air sortant du réchauffeur 45 et il est enfin dirigé vers la chambre de mélange d'air conditionné 56.

Lorsque les échangeurs 27A et 27B sont supercritiques, alors de préférence, la pompe 24 l'est également.

Bien que cela ne soit pas représenté sur les modes de réalisation des figures 2 à 5, il serait également possible d'avoir l'échangeur de chaleur 27 sur la canalisation 203, en plus des échangeurs 27A et 27B.

La répartition des différents flux de carburant cryogénique liquide dans les canalisations 204, 201 et 202, se fait via l'ouverture ou la fermeture des vannes 215, 212 et respectivement 213, en fonction des phases de vol.

Le réservoir 29, la vanne 214 et la pompe haute pression 28 sont représentés sur les figures 3 à 5 mais sont optionnels et ne sont utiles que pour gérer l'évaporation (en anglais « boil-off ») du carburant due à une isolation thermique imparfaite du réservoir de carburant 20.

Pour mémoire, on rappelle que le point critique de l'hydrogène est de 32K (moins 241,15°C) pour sa température critique et de 12, 8 bars (12,8.10⁵ Pa) pour sa pression critique et que le point critique du gaz naturel est de 190 K (moins 83,15°C) pour sa température critique et de 46,8 bars (46,8.10⁵ Pa) pour sa pression critique.

## Revendications

1. Installation (2) d'alimentation en carburant cryogénique de la chambre de combustion (16) d'une turbomachine (1) d'un aéronef, cet aéronef comprenant un circuit (5) d'air conditionné, **caractérisé en ce qu'**elle comprend :
- un réservoir de carburant cryogénique (20) à l'état liquide,
- une chambre de mélange (21) recevant différents flux de carburant cryogénique à l'état supercritique ou gazeux, cette chambre de mélange (21) étant configurée pour être raccordée à ladite chambre de combustion (16) pour alimenter celle-ci en carburant cryogénique à l'état supercritique ou gazeux,
- au moins un échangeur de chaleur (27, 27A, 27B) carburant cryogénique/air du circuit de conditionnement d'air de l'aéronef, monté sur une canalisation (203, 204, 205, 206, 207) raccordant ledit réservoir de carburant cryogénique (20) à ladite chambre de mélange (21) et sur une canalisation (401, 402, 403, 404, 405, 406, 407, 408) configurée pour être raccordée au circuit (5) d'air conditionné de l'aéronef, l'échange thermique s'y effectuant de façon à refroidir l'air du circuit de conditionnement d'air (4, 4', 4", 4"') de l'aéronef et à augmenter la température du carburant cryogénique issu dudit réservoir (20).

2. Installation (2) selon la revendication 1, **caractérisée en ce qu'**elle comprend au moins un échangeur de chaleur (23) carburant cryogénique /air (F1) circulant dans le compresseur d'air (14, 15) de la turbomachine, monté sur une canalisation (201) raccordant ledit réservoir de carburant cryogénique (20) à ladite chambre de mélange (21), l'échange thermique s'y effectuant de façon à réchauffer le carburant cryogénique et à refroidir l'air (F1) circulant dans le compresseur d'air (14, 15) de la turbomachine.

3. Installation (2) selon la revendication 1 ou 2, **caractérisée en ce qu'**elle comprend au moins un échangeur de chaleur (25) carburant cryogénique /huile de lubrification, monté sur une canalisation (202) raccordant ledit réservoir de carburant cryogénique (20) à ladite chambre de mélange (21), l'échange thermique s'y effectuant de façon à réchauffer le carburant cryogénique et à refroidir l'huile de lubrification (F2).

4. Installation (2) selon la revendication 3, **caractérisée en ce qu'**elle comprend au moins un échangeur de chaleur (26) carburant cryogénique /air de refroidissement des aubes de la turbine (17, 18) de la turbomachine (1), monté sur la canalisation (202) raccordant le réservoir de carburant cryogénique (20) à ladite chambre de mélange (21), en série et en aval de l'échangeur de chaleur (25) carburant cryogénique /huile de lubrification, l'échange thermique s'y effectuant de façon à réchauffer le carburant cryogénique issu de l'échangeur de chaleur (25) carburant cryogénique /huile de lubrification et à refroidir l'air de refroidissement (F3) des aubes de la turbine (17, 18) de la turbomachine (1).

5. Installation (2) selon l'une quelconque des revendications précédentes, **caractérisée en ce qu'**au moins l'un des échangeurs de chaleur parmi l'échangeur de chaleur (27A, 27B) carburant cryogénique/air du circuit de conditionnement d'air de l'aéronef, l'échangeur de chaleur (23) carburant cryogénique/air (F1) circulant dans le compresseur d'air (14, 15) de la turbomachine, l'échangeur de chaleur (25) carburant cryogénique/huile de lubrification et l'échangeur de chaleur (26) carburant cryogénique/air de refroidissement (F3) des aubes de la turbine (17, 18) de la turbomachine (1) est un échangeur de type supercritique qui permet d'amener le carburant cryogénique à une température supérieure à sa température critique.

6. Installation (2) selon l'une quelconque des revendications précédentes, **caractérisée en ce qu'**au moins l'un des échangeurs de chaleur parmi l'échangeur de chaleur (27, 27A, 27B) carburant cryogénique/air du circuit de conditionnement d'air de l'aéronef, l'échangeur de chaleur (23) carburant cryogénique/air (F1) circulant dans le compresseur d'air (14, 15) de la turbomachine, l'échangeur de chaleur (25) carburant cryogénique/huile de lubrification et l'échangeur de chaleur (26) carburant cryogénique/air de refroidissement (F3) des aubes de la turbine (17, 18) de la turbomachine (1) est un échangeur qui permet de faire passer le carburant cryogénique à l'état gazeux.

7. Installation (2) selon l'une quelconque des revendications précédentes, **caractérisé en ce que** l'échangeur de chaleur carburant cryogénique/air du circuit de conditionnement d'air de l'aéronef est un échangeur de chaleur (27) carburant cryogénique vaporisé/air du circuit de conditionnement d'air de l'aéronef, qui réalise un échange thermique entre l'air du circuit de conditionnement d'air (4, 4', 4", 4"') de l'aéronef (1) et le carburant cryogénique qui s'est vaporisé à l'intérieur dudit réservoir de carburant cryogénique (20).

8. Installation (2) selon l'une des revendications 1 à 6, **caractérisée en ce que** l'échangeur de chaleur carburant cryogénique/air du circuit de conditionnement d'air de l'aéronef est un échangeur de chaleur (27A, 27B) carburant cryogénique /air du circuit de conditionnement d'air de l'aéronef, qui réalise un échange thermique entre l'air du circuit de conditionnement d'air (4, 4', 4", 4‴) de l'aéronef (1) et le carburant cryogénique, stocké dans ledit réservoir de carburant cryogénique (20).

9. Installation (2) selon l'une quelconque des revendications précédentes, **caractérisée en ce qu'**elle comprend un compresseur haute pression (28) de carburant cryogénique vaporisé, qui comprime le carburant cryogénique qui s'est vaporisé à l'intérieur dudit réservoir de carburant cryogénique (20) et un réservoir tampon (29) de stockage de carburant cryogénique à l'état gazeux, montés en série sur une canalisation (203) raccordant la partie supérieure du réservoir de carburant cryogénique (20) à ladite chambre de mélange (21), le réservoir tampon (29) étant monté en aval dudit compresseur haute pression (28) de carburant cryogénique vaporisé.

10. Installation (2) selon les revendications 7 et 9, **caractérisée en ce que** l'échangeur de chaleur (27) carburant cryogénique vaporisé/air du circuit de conditionnement d'air de l'aéronef est monté sur la canalisation (203) raccordant la partie supérieure du réservoir de carburant cryogénique (20) à ladite chambre de mélange (21), entre le compresseur haute pression (28) de carburant cryogénique vaporisé et le réservoir tampon (29) de stockage de carburant cryogénique à l'état gazeux.

11. Installation (2) selon la revendication 8, **caractérisée en ce qu'**elle comprend un premier échangeur de chaleur (27A) carburant cryogénique /air du circuit de conditionnement d'air de l'aéronef et un deuxième échangeur de chaleur (27B) carburant cryogénique /air du circuit de conditionnement d'air de l'aéronef, montés en série entre le réservoir de carburant cryogénique (20) et ladite chambre de mélange (21).

12. Installation (2) selon l'une quelconque des revendications précédentes, **caractérisée en ce qu'**elle comprend une première pompe haute pression (22), disposée entre la chambre de mélange (21) et la chambre de combustion (16), et qui permet d'amener le carburant cryogénique issu de cette chambre de mélange (21), sous haute pression, avant son introduction dans ladite chambre de combustion (16).

13. Installation (2) selon l'une quelconque des revendications précédentes, **caractérisée en ce qu'**elle comprend au moins un échangeur de chaleur (23) carburant cryogénique /air (F1) circulant dans le compresseur d'air (14, 15) de la turbomachine, monté sur une canalisation (201) raccordant ledit réservoir de carburant cryogénique (20) à ladite chambre de mélange (21), l'échange thermique s'y effectuant de façon à réchauffer le carburant cryogénique et à refroidir l'air (F1) circulant dans le compresseur d'air (14, 15) de la turbomachine,
**en ce qu'**elle comprend au moins un échangeur de chaleur (25) carburant cryogénique /huile de lubrification, monté sur une canalisation (202) raccordant ledit réservoir de carburant cryogénique (20) à ladite chambre de mélange (21), l'échange thermique s'y effectuant de façon à réchauffer le carburant cryogénique et à refroidir l'huile de lubrification (F2),
et **en ce que** l'échangeur de chaleur (23) carburant cryogénique /air (F1) circulant dans le compresseur d'air (14, 15) de la turbomachine (1) et l'échangeur de chaleur (25) carburant cryogénique /huile de lubrification sont montés en parallèle entre le réservoir de carburant cryogénique (20) et la chambre de mélange (21).

14. Installation (2) selon l'une quelconque des revendications précédentes, **caractérisée en ce qu'**elle comprend au moins un échangeur de chaleur (23) carburant cryogénique /air (F1) circulant dans le compresseur d'air (14, 15) de la turbomachine, monté sur une canalisation (201) raccordant ledit réservoir de carburant cryogénique (20) à ladite chambre de mélange (21), l'échange thermique s'y effectuant de façon à réchauffer le carburant cryogénique et à refroidir l'air (F1) circulant dans le compresseur d'air (14, 15) de la turbomachine,
**en ce qu'**elle comprend au moins un échangeur de chaleur (25) carburant cryogénique /huile de lubrification, monté sur une canalisation (202) raccordant ledit réservoir de carburant cryogénique (20) à ladite chambre de mélange (21), l'échange thermique s'y effectuant de façon à réchauffer le carburant cryogénique et à refroidir l'huile de lubrification (F2),
et **en ce qu'**elle comprend une deuxième pompe haute pression (24), disposée en aval du réservoir de carburant cryogénique (20) et en amont de l'échangeur de chaleur (23) carburant cryogénique /air (F1) circulant dans le compresseur d'air (14, 15) de la turbomachine (1) et en amont de l'échangeur de chaleur (25) carburant cryogénique /huile de lubrification.

15. Installation (2) selon la revendication 14, **caractérisée en ce que** ladite deuxième pompe haute pression (24) permet d'amener le carburant cryogénique à une pression supérieure à sa pression critique.

16. Installation (2) selon l'une quelconque des revendications précédentes, **caractérisée en ce qu'**elle comprend au moins une vanne (211, 212, 213, 215) en amont de chaque échangeur de chaleur (27, 23, 25, 27A) et **en ce que** l'ouverture et la fermeture de ces différentes vannes sont pilotées par une unité centrale de commande (3).

17. Installation (2) selon l'une quelconque des revendications précédentes, **caractérisée en ce que** le carburant cryogénique est choisi parmi l'hydrogène liquide et le gaz naturel liquéfié.

18. Turbomachine d'un aéronef comprenant une veine d'air primaire (12) munie successivement d'au moins un compresseur d'air (14, 15), d'une chambre de combustion (16) alimentée en carburant cryogénique et d'au moins une turbine (17, 18), **caractérisée en ce qu'**elle comprend une installation (2) d'alimentation en carburant cryogénique de sa chambre de combustion (16) conforme à l'une quelconque des revendications 1 à 17.

## Patentansprüche

1. Anlage (2) zur Versorgung der Brennkammer (16) einer Turbomaschine (1) eines Luftfahrzeugs mit kryogenem Brennstoff, wobei dieses Luftfahrzeug einen Klimaanlagenkreis (5) umfasst, **dadurch gekennzeichnet, dass** sie umfasst:
- einen Vorratsbehälter für kryogenen Brennstoff (20) in flüssigem Zustand,
- eine Mischkammer (21), die verschiedene kryogene Brennstoffströme im superkritischen oder gasförmigen Zustand aufnimmt, wobei diese Mischkammer (21) ausgelegt ist, um mit der Brennkammer (16) verbunden zu sein, um diese mit kryogenem Brennstoff im superkritischen oder gasförmigen Zustand zu versorgen,
- mindestens einen Wärmetauscher (27, 27A, 27B) kryogener Brennstoff/Luft aus dem Luftaufbereitungskreis des Luftfahrzeugs, der an einer Leitung (203, 204, 205, 206, 207) angebracht ist, die den Vorratsbehälter für kryogenen Brennstoff (20) mit der Mischkammer (21) verbindet, und an einer Leitung (401, 402, 403, 404, 405, 406, 407, 408), die ausgelegt ist, um mit dem Klimaanlagenkreis (5) des Luftfahrzeugs verbunden zu sein, wobei der Wärmeaustausch darin so erfolgt, dass die Luft aus dem Luftaufbereitungskreis (4, 4', 4", 4‴) des Luftfahrzeugs gekühlt wird und die Temperatur des kryogenen Brennstoffs aus dem Vorratsbehälter (20) erhöht wird.

2. Anlage (2) nach Anspruch 1, **dadurch gekennzeichnet, dass** sie mindestens einen Wärmetauscher (23) kryogener Brennstoff/Luft (F1), die im Luftverdichter (14, 15) der Turbomaschine zirkuliert, umfasst, der an einer Leitung (201) angebracht ist, die den Vorratsbehälter für kryogenen Brennstoff (20) mit der Mischkammer (21) verbindet, wobei der Wärmeaustausch darin so erfolgt, dass der kryogene Brennstoff erwärmt und die im Luftverdichter (14, 15) der Turbomaschine zirkulierende Luft (F1) gekühlt wird.

3. Anlage (2) nach Anspruch 1 oder 2, **dadurch gekennzeichnet, dass** sie mindestens einen Wärmetauscher (25) kryogener Brennstoff/Schmieröl umfasst, der an einer Leitung (202) angebracht ist, die den Vorratsbehälter für kryogenen Brennstoff (20) mit der Mischkammer (21) verbindet, wobei der Wärmeaustausch darin so erfolgt, dass der kryogene Brennstoff erwärmt und das Schmieröl (F2) gekühlt wird.

4. Anlage (2) nach Anspruch 3, **dadurch gekennzeichnet, dass** sie mindestens einen Wärmetauscher (26) kryogener Brennstoff/Kühlluft der Schaufeln der Turbine (17, 18) der Turbomaschine (1) umfasst, der an der Leitung (202) angebracht ist, die den Vorratsbehälter für kryogenen Brennstoff (20) mit der Mischkammer (21) verbindet, in Reihe und stromabwärts des Wärmetauschers (25) kryogener Brennstoff/Schmieröl, wobei der Wärmeaustausch darin so erfolgt, dass der kryogene Brennstoff aus dem Wärmeaustauscher (25) kryogener Brennstoff/Schmieröl erwärmt und die Kühlluft (F3) der Schaufeln der Turbine (17, 18) der Turbomaschine (1) gekühlt wird.

5. Anlage (2) nach einem der vorhergehenden Ansprüche, **dadurch gekennzeichnet, dass** mindestens einer der Wärmetauscher von dem Wärmetauscher (27A, 27B) kryogener Brennstoff/Luft aus dem Luftaufbereitungskreis des Luftfahrzeugs, dem Wärmetauscher (23) kryogener Brennstoff/Luft (F1), die im Luftverdichter (14, 15) der Turbomaschine zirkuliert, dem Wärmetauscher (25) kryogener Brennstoff/Schmieröl und dem Wärmetauscher (26) kryogener Brennstoff/Kühlluft (F3) der Schaufeln der Turbine (17, 18) der Turbomaschine (1) ein superkritischer Wärmetauscher ist, der es ermöglicht, den kryogenen Brennstoff auf eine Temperatur über seiner kritischen Temperatur zu bringen.

6. Anlage (2) nach einem der vorhergehenden Ansprüche, **dadurch gekennzeichnet, dass** mindestens einer der Wärmetauscher von dem Wärmetauscher (27, 27A, 27B) kryogener Brennstoff/Luft aus dem Luftaufbereitungskreis des Luftfahrzeugs, dem Wärmetauscher (23) kryogener Brennstoff/Luft (F1), die im Luftverdichter (14, 15) der Turbomaschine zirkuliert, dem Wärmetauscher (25) kryogener Brennstoff/Schmieröl und dem Wärmetauscher (26) kryogener Brennstoff/Kühlluft (F3) der Schaufeln der Turbine (17, 18) der Turbomaschine (1) ein Wärmetauscher ist, der es ermöglicht, den kryogenen Brennstoff in den gasförmigen Zustand zu bringen.

7. Anlage (2) nach einem der vorhergehenden Ansprüche, **dadurch gekennzeichnet, dass** der Wärmetauscher kryogener Brennstoff/Luft aus dem Luftaufbereitungskreis des Luftfahrzeugs ein Wärmetauscher (27) verdampfter kryogener Brennstoff/Luft aus dem Luftaufbereitungskreis des Luftfahrzeugs ist, der einen Wärmeaustausch zwischen der Luft aus dem Luftaufbereitungskreis (4, 4', 4'', 4‴) des Luftfahrzeugs (1) und dem kryogenen Brennstoff durchführt, der im Inneren des Vorratsbehälters für kryogenen Brennstoff (20) verdampft ist.

8. Anlage (2) nach einem der Ansprüche 1 bis 6, **dadurch gekennzeichnet, dass** der Wärmetauscher kryogener Brennstoff/Luft aus dem Luftaufbereitungskreis des Luftfahrzeugs ein Wärmetauscher (27A, 27B) kryogener Brennstoff/Luft aus dem Luftaufbereitungskreis des Luftfahrzeugs ist, der einen Wärmeaustausch zwischen der Luft aus dem Luftaufbereitungskreis (4, 4', 4", 4‴) des Luftfahrzeugs (1) und dem kryogenen Brennstoff durchführt, der in dem Vorratsbehälter für kryogenen Brennstoff (20) gelagert ist.

9. Anlage (2) nach einem der vorstehenden Ansprüche, **dadurch gekennzeichnet, dass** sie einen Hochdruckverdichter (28) für verdampften kryogenen Brennstoff, der den im Inneren des Vorratsbehälters (20) für kryogenen Brennstoff verdampften kryogenen Brennstoff komprimiert, und einen Puffer-Vorratsbehälter (29) zur Speicherung von kryogenem Brennstoff in gasförmigem Zustand umfasst, die in Reihe an einer Leitung (203) angebracht sind, die den oberen Teil des Vorratsbehälter für kryogenen Brennstoff (20) mit der Mischkammer (21) verbindet, wobei der Puffer-Vorratsbehälter (29) stromabwärts des Hochdruckverdichters (28) für verdampften kryogenen Brennstoff angebracht ist.

10. Anlage (2) nach den Ansprüchen 7 und 9, **dadurch gekennzeichnet, dass** der Wärmetauscher (27) verdampfter kryogener Brennstoff/Luft aus dem Luftaufbereitungskreis des Luftfahrzeugs an der Leitung (203) angebracht ist, die den oberen Teil des Vorratsbehälters (20) für kryogenen Brennstoff mit der Mischkammer (21) verbindet, zwischen dem Hochdruckverdichter (28) für verdampften kryogenen Brennstoff und dem Puffer-Vorratsbehälter (29) zur Speicherung von kryogenem Brennstoff in gasförmigem Zustand.

11. Anlage (2) nach Anspruch 8, **dadurch gekennzeichnet, dass** sie einen ersten Wärmetauscher (27A) kryogener Brennstoff/Luft aus dem Luftaufbereitungskreis des Luftfahrzeugs und einen zweiten Wärmetauscher (27B) kryogener Brennstoff/Luft aus dem Luftaufbereitungskreis des Luftfahrzeugs umfasst, die in Reihe zwischen dem Vorratsbehälter für kryogenen Brennstoff (20) und der Mischkammer (21) angebracht sind.

12. Anlage (2) nach einem der vorhergehenden Ansprüche, **dadurch gekennzeichnet, dass** sie eine erste Hochdruckpumpe (22) umfasst, die zwischen der Mischkammer (21) und der Brennkammer (16) angeordnet ist und es ermöglicht, den kryogenen Brennstoff aus dieser Mischkammer (21) unter hohem Druck zuzuführen, bevor er in die Brennkammer (16) eingeleitet wird.

13. Anlage (2) nach einem der vorstehenden Ansprüche, **dadurch gekennzeichnet, dass** sie mindestens einen Wärmetauscher (23) kryogener Brennstoff/Luft (F1), die im Luftverdichter (14, 15) der Turbomaschine zirkuliert, umfasst, der an einer Leitung (201) angebracht ist, die den Vorratsbehälter für kryogenen Brennstoff (20) mit der Mischkammer (21) verbindet, wobei der Wärmeaustausch darin so erfolgt, dass der kryogene Brennstoff erwärmt und die im Luftverdichter (14, 15) der Turbomaschine zirkulierende Luft (F1) gekühlt wird,
dass sie mindestens einen Wärmetauscher (25) kryogener Brennstoff/Schmieröl umfasst, der an einer Leitung (202) angebracht ist, die den Vorratsbehälter (20) für kryogenen Brennstoff mit der Mischkammer (21) verbindet, wobei der Wärmeaustausch darin so erfolgt, dass der kryogene Brennstoff erwärmt und das Schmieröl gekühlt wird (F2),
und dass der Wärmetauscher (23) kryogener Brennstoff/Luft (F1), die im Luftverdichter (14, 15) der Turbomaschine (1) zirkuliert, und der Wärmetauscher (25) kryogener Brennstoff/Schmieröl parallel zwischen dem Vorratsbehälter für kryogenen Brennstoff (20) und der Mischkammer (21) angebracht sind.

14. Anlage (2) nach einem der vorstehenden Ansprüche, **dadurch gekennzeichnet, dass** sie mindestens einen Wärmetauscher (23) kryogener Brennstoff/Luft (F1) umfasst, die im Luftverdichter (14, 15) der Turbomaschine zirkuliert, der an einer Leitung (201) angebracht ist, die den Vorratsbehälter für kryogenen Brennstoff (20) mit der Mischkammer (21) verbindet, wobei der Wärmeaustausch darin so erfolgt, dass der kryogene Brennstoff erwärmt und die im Luftverdichter (14, 15) der Turbomaschine zirkulierende Luft (F1) gekühlt wird,
dass sie mindestens einen Wärmetauscher (25) kryogener Brennstoff/Schmieröl umfasst, der an einer Leitung (202) angebracht ist, die den Vorratsbehälter (20) für kryogenen Brennstoff mit der Mischkammer (21) verbindet, wobei der Wärmeaustausch darin so erfolgt, dass der kryogene Brennstoff erwärmt und das Schmieröl (F2) gekühlt wird,
und dass sie eine zweite Hochdruckpumpe (24) umfasst, die stromabwärts des Vorratsbehälter für kryogenen Brennstoff (20) und stromaufwärts des Wärmetauschers (23) kryogener Brennstoff/Luft (F1), die im Luftverdichter (14, 15) der Turbomaschine (1) zirkuliert, und stromaufwärts des Wärmetauschers (25) kryogener Brennstoff/Schmieröl angeordnet ist.

15. Anlage (2) nach Anspruch 14, **dadurch gekennzeichnet, dass** die zweite Hochdruckpumpe (24) es ermöglicht, den kryogenen Brennstoff auf einen Druck zu bringen, der höher ist als sein kritischer Druck.

16. Anlage (2) nach einem der vorhergehenden Ansprüche, **dadurch gekennzeichnet, dass** sie mindestens ein Ventil (211, 212, 213, 215) stromaufwärts jedes Wärmetauschers (27, 23, 25, 27A) umfasst und dass das Öffnen und Schließen dieser verschiedenen Ventile von einer zentralen Steuereinheit (3) gesteuert wird.

17. Anlage (2) nach einem der vorstehenden Ansprüche, **dadurch gekennzeichnet, dass** der kryogene Brennstoff aus flüssigem Wasserstoff und verflüssigtem Erdgas ausgewählt ist.

18. Turbomaschine eines Luftfahrzeugs, die einen Primärluftkanal (12) umfasst, der nacheinander mit mindestens einem Luftverdichter (14, 15), einer mit kryogenem Brennstoff gespeisten Brennkammer (16) und mindestens einer Turbine (17, 18) versehen ist, **dadurch gekennzeichnet, dass** sie eine Anlage (2) zur Versorgung ihrer Brennkammer (16) mit kryogenem Brennstoff nach einem der Ansprüche 1 bis 17 umfasst.

## Claims

1. An installation (2) for supplying cryogenic fuel to the combustion chamber (16) of a turbine engine (1) of an aircraft, this aircraft comprising a conditioned air circuit (5) **characterised in that** it comprises:
- a tank (20) for cryogenic fuel in the liquid state,
- a mixing chamber (21) receiving various flows of cryogenic fuel in the supercritical or gaseous state, this mixing chamber (21) being configured to be connected to said combustion chamber (16) for supplying same with cryogenic fuel in the supercritical or gaseous state,
- at least one heat exchanger (27, 27A, 27B) between the cryogenic fuel and the air of the air-conditioning circuit of the aircraft, mounted in a line (203, 204, 205, 206, 207) connecting said cryogenic fuel tank (20) to said mixing chamber (21), and in a line (401, 402, 403, 404, 405, 406, 407, 408) configured to be connected to the conditioned air circuit (5) of the aircraft, the heat exchange taking place therein so as to cool the air of the air-conditioning circuit (4, 4', 4'', 4‴) of the aircraft and to increase the temperature of the cryogenic fuel coming from said tank (20).

2. The installation (2) according to claim 1, **characterised in that** it comprises at least one heat exchanger (23) between the cryogenic fuel and the air (F1) circulating in the air compressor (14, 15) of the turbine engine, mounted in a line (201) connecting said cryogenic fuel tank (20) to said mixing chamber (21), the heat exchange taking place therein so as to heat the cryogenic fuel and cool the air (F1) circulating in the air compressor (14, 15) of the turbine engine.

3. The installation (2) according to claim 1 or 2, **characterised in that** it comprises at least one cryogenic fuel/lubricating oil heat exchanger (25), mounted in a line (202) connecting said cryogenic fuel tank (20) to said mixing chamber (21), the heat exchange taking place therein so as to heat the cryogenic fuel and cool the lubricating oil (F2).

4. The installation (2) according to claim 3, **characterised in that** it comprises at least one heat exchanger (26) between the cryogenic fuel and the cooling air of the turbine blades (17, 18) of the turbine engine (1), mounted in the line (202) connecting the cryogenic fuel tank (20) to said mixing chamber (21), in series and downstream of the cryogenic fuel/lubricating oil heat exchanger (25), the heat exchange taking place therein so as to heat the cryogenic fuel coming from the cryogenic fuel/lubricating oil heat exchanger (25) and cool the cooling air (F3) of the turbine blades (17, 18) of the turbine engine (1).

5. The installation (2) according to any one of the preceding claims, **characterised in that** at least one of the heat exchangers among the heat exchanger (27A, 27B) between the cryogenic fuel and the air of the air-conditioning circuit of the aircraft, the heat exchanger (23) between the cryogenic fuel and the air (F1) circulating in the air compressor (14, 15) of the turbine engine, the cryogenic fuel/lubricating oil heat exchanger (25) and the heat exchanger (26) between the cryogenic fuel and the cooling air (F3) of the turbine blades (17, 18) of the turbine engine (1) is a supercritical exchanger which can bring the cryogenic fuel to a temperature greater than its critical temperature.

6. The installation (2) according to any one of the preceding claims, **characterised in that** at least one of the heat exchangers among the heat exchanger (27, 27A, 27B) between the cryogenic fuel and the air of the air-conditioning circuit of the aircraft, the heat exchanger (23) between the cryogenic fuel and the air (F1) circulating in the air compressor (14, 15) of the turbine engine, the cryogenic fuel/lubricating oil heat exchanger (25) and the heat exchanger (26) between the cryogenic fuel and the cooling air (F3) of the turbine blades (17, 18) of the turbine engine (1) is an exchanger which can allow the passage of the cryogenic fuel into the gaseous state.

7. The installation (2) according to any one of the preceding claims, **characterised in that** the heat exchanger between the cryogenic fuel and the air of the air-conditioning circuit of the aircraft is a heat exchanger (27) between the vaporised cryogenic fuel and the air of the air-conditioning circuit of the aircraft, which carries out a heat exchange between the air of the air-conditioning circuit (4, 4', 4", 4‴) of the aircraft (1) and the cryogenic fuel which is vaporised inside said cryogenic fuel tank (20).

8. The installation (2) according to one of claims 1 to 6, **characterised in that** the heat exchanger between the cryogenic fuel and the air of the air-conditioning circuit of the aircraft is a heat exchanger (27A, 27B) between the cryogenic fuel and the air of the air-conditioning circuit of the aircraft, which carries out a heat exchange between the air of the air-conditioning circuit (4, 4', 4", 4‴) of the aircraft (1) and the cryogenic fuel stored in said cryogenic fuel tank (20).

9. The installation (2) according to any one of the preceding claims, **characterised in that** it comprises a high-pressure compressor (28) of vaporised cryogenic fuel, which compresses the cryogenic fuel which is vaporised inside said cryogenic fuel tank (20) and a buffer tank (29) for storage of cryogenic fuel in the gaseous state, mounted in series in a line (203) connecting the upper part of the cryogenic fuel tank (20) to said mixing chamber (21), the buffer tank (29) being mounted downstream of said high-pressure compressor (28) of vaporised cryogenic fuel.

10. The installation (2) according to claims 7 and 9, **characterised in that** the heat exchanger (27) between the vaporised cryogenic fuel and the air of the air-conditioning circuit of the aircraft is mounted in the line (203) connecting the upper part of the cryogenic fuel tank (20) to said mixing chamber (21), between the high-pressure compressor (28) for vaporised cryogenic fuel and the buffer tank (29) for storage of cryogenic fuel in the gaseous state.

11. The installation (2) according to claim 8, **characterised in that** it comprises a first heat exchanger (27A) between the cryogenic fuel and the air of the air-conditioning circuit of the aircraft and a second heat exchanger (27B) between the cryogenic fuel and the air of the air-conditioning circuit of the aircraft, mounted in series between the cryogenic fuel tank (20) and said mixing chamber (21).

12. The installation (2) according to any one of the preceding claims, **characterised in that** it comprises a first high-pressure pump (22), disposed between the mixing chamber (21) and the combustion chamber (16), and which bring the cryogenic fuel originating from this mixing chamber (21), to high pressure, before its introduction into said combustion chamber (16).

13. The installation (2) according to any one of the preceding claims, **characterised in that** it comprises at least one heat exchanger (23) between the cryogenic fuel and the air (F1) circulating in the air compressor (14, 15) of the turbine engine, mounted in a line (201) connecting said cryogenic fuel tank (20) to said mixing chamber (21), the heat exchange taking place therein so as to heat the cryogenic fuel and cool the air (F1) circulating in the air compressor (14, 15) of the turbine engine,
**in that** it comprises at least one cryogenic fuel/lubricating oil heat exchanger (25), mounted in a line (202) connecting said cryogenic fuel tank (20) to said mixing chamber (21), the heat exchange taking place therein so as to heat the cryogenic fuel and cool the lubricating oil (F2),
and **in that** the heat exchanger (23) between the cryogenic fuel and the air (F1) circulating in the air compressor (14, 15) of the turbine engine (1) and the cryogenic fuel/lubricating oil heat exchanger (25) are mounted in parallel between the cryogenic fuel tank (20) and the mixing chamber (21).

14. The installation (2) according to any one of the preceding claims, **characterised in that** it comprises at least one heat exchanger (23) between the cryogenic fuel and the air (F1) circulating in the air compressor (14, 15) of the turbine engine, mounted in a line (201) connecting said cryogenic fuel tank (20) to said mixing chamber (21), the heat exchange taking place therein so as to heat the cryogenic fuel and cool the air (F1) circulating in the air compressor (14, 15) of the turbine engine,
**in that** it comprises at least one cryogenic fuel/lubricating oil heat exchanger (25), mounted in a line (202) connecting said cryogenic fuel tank (20) to said mixing chamber (21), the heat exchange taking place therein so as to heat the cryogenic fuel and cool the lubricating oil (F2),
and **in that** it comprises a second high-pressure pump (24), disposed downstream of the cryogenic fuel tank (20) and upstream of the heat exchanger (23) between the cryogenic fuel and the air (F1) circulating in the air compressor (14, 15) of the turbine engine (1) and upstream of the cryogenic fuel/lubricating oil heat exchanger (25).

15. The installation (2) according to claim 14, **characterised in that** said second high-pressure pump (24) can bring the cryogenic fuel to a pressure greater than its critical pressure.

16. The installation (2) according to any one of the preceding claims, **characterised in that** it comprises at least one valve (211, 212, 213, 215) upstream of each heat exchanger (27, 23, 25, 27A) and **in that** the opening and closing of these various valves are controlled by a central control unit (3).

17. The installation (2) according to any one of the preceding claims, **characterised in that** the cryogenic fuel is chosen from liquid hydrogen and liquefied natural gas.

18. A turbine engine of an aircraft comprising a primary air stream (12) successively provided with at least one air compressor (14, 15), a combustion chamber (16) supplied with cryogenic fuel and at least one turbine (17, 18), **characterised in that** it comprises an installation (2) for supplying cryogenic fuel to its combustion chamber (16) in accordance with any one of claims 1 to 17.
